# DEMANDE DE BREVET EUROPEEN

(11) **EP 1 326 205 A1**
(43) Date de publication de la demande: **09.07.2003**
(21) Numéro de dépôt: 02080253.4
(22) Date de dépôt: 11.12.2002
(51) Int. Cl.: G06T 1/00

(54) **Détection optimisée d'un marquage au sein d'un signal d'information**

(30) Priorité: 20.12.2001 FR 0116576
(71) Demandeur: Koninklijke Philips Electronics N.V., 5621 BA Eindhoven (NL)
(72) Inventeur: De Perthuis, Hugues, 75008 Paris (FR); Desmicht, Eric, 75008 Paris (FR)
(74) Mandataire: Chaffraix, Jean

(57) **Abrégé**

L'invention concerne un procédé de détection d'un marquage W composé d'un ensemble de coefficients, dans un signal d'information S, ledit marquage W et ledit signal d'information S étant configurés sous la forme de matrices SM M*M. Les coefficients de la matrice transformée de Fourier de la matrice du signal TSM et les coefficients de la matrice transformée de Fourier de la matrice de marquage TWM sont utilisés dans une étape de calcul CAL de la matrice transformée inverse de la multiplication ITM de la matrice transformée du signal TSM et de la matrice transformée du marquage TWM, ledit calcul CAL étant réalisé par séquences qui résultent chacune en l'obtention de I colonnes de la matrice transformée inverse de la multiplication, M étant multiple de I et différent de I. Lesdites I colonnes sont stockées dans une mémoire dite interne et l'étape de détection DET du marquage est réalisée, à chaque séquence, par détection de pics sur chaque ensemble des I colonnes pendant que lesdites I colonnes sont présentes dans la mémoire interne.

L'invention permet l'utilisation d'une mémoire interne de petite taille.
Application : Appareils de traitement de signal avec protection de données : décodeurs, lecteurs...

## Description

L'invention concerne un procédé de détection d'un marquage (watermarking, en anglais) composé d'un ensemble de coefficients, dans un signal d'information, incluant les étapes de :
- configuration destinée à configurer ledit marquage sous la forme d'une matrice de dimension M*M, et ledit signal d'information sous la forme d'au moins une matrice de dimension M*M,
- calcul des coefficients de la matrice transformée de Fourier de la matrice du signal,
- calcul des coefficients de la matrice transformée de Fourier de la matrice de marquage,
- calcul de la matrice transformée inverse de la multiplication de la matrice transformée du signal et de la matrice transformée du marquage,
- détection du marquage par détection de pics dans les coefficients de la matrice transformée inverse de la multiplication.

L'invention concerne également un circuit intégré incluant des moyens pour réaliser les étapes du procédé selon l'invention et un appareil de traitement de signaux d'information qui peut être par exemple un décodeur de signaux vidéo numériques.

Un tel procédé est, par exemple, connu du document WO99/45706 dont la description fait état de mise en oeuvre d'un calcul de corrélation du signal avec le marquage, ledit signal et ledit marquage étant présentés sous la forme de matrices 128*128. Ce calcul de corrélation est réalisé en plusieurs étapes telles que décrites ci-avant. L'étape de calcul de la matrice transformée inverse de la multiplication de la matrice transformée du signal et de la matrice transformée du marquage est réalisée en deux sous-étapes, une première calcule la multiplication du signal avec le conjugué du marquage, une seconde calcule la transformée inverse. Pour calculer ainsi la transformée inverse, les coefficients de toutes les lignes et de toutes les colonnes de la matrice résultant de la multiplication doivent être disponibles en début de l'étape de calcul de la transformée inverse. Cela nécessite que la matrice résultat de la multiplication soit stockée dans une mémoire pour être disponible dans le calcul de la transformée inverse. La mémoire doit donc être de taille supérieure ou égale à celle des matrices qu'elle est destinée à stocker.

L'invention est liée aux considérations suivantes :
Le marquage de signaux d'information est destiné en particulier à éviter des copies de ces signaux d'information, à authentifier ces signaux... Ces fonctions nécessitent que le marquage apposé généralement sous la forme d'un filigrane, par exemple, constitué de points pseudo-aléatoires, reste secret et ne puisse être isolé. En effet, si tel était le cas, le marquage isolé pourrait être enlevé, apposé sur de faux signaux... On comprend ici, la nécessité de sécuriser l'accès aux caractéristiques du marquage. Cela revient à ne pas laisser des données desquelles les caractéristiques du marquage puissent se déduire, circuler dans des portions de circuit où elles pourraient être lues.

Dans l'état de la technique, une mémoire 128*128 est nécessaire pour stocker le résultat de la multiplication de la matrice transformée de Fourier du signal et de la matrice transformée du marquage. Une telle mémoire est d'une taille considérable. Par exemple, pour des matrices 128*128, la taille est de l'ordre de 2 mm² en technologie courante (ou 0,18 µm).

Une première option de réalisation est d'inclure cette mémoire dans la portion de circuit ou le circuit matériel qui comporte les ressources pour effectuer les autres opérations où les caractéristiques du marquage sont utilisées. Cela implique que ledit circuit ou portion de circuit matériel a une taille importante.

Une autre option est de faire un encryptage au vol et de faire appel à une mémoire extérieure à la portion de circuit où est réalisée la détection de marquage, pour stocker les coefficients des matrices intermédiaires de calcul. Cela présente des inconvénients du point de vue de la sécurité, les données pouvant être lues lors des accès à la mémoire extérieure.

Un but de l'invention est de permettre de résoudre les problèmes rencontrés dans ces deux options, à savoir éviter l'incorporation d'une mémoire de taille importante sur le circuit matériel qui réalise les opérations de détection de marquage et éviter les appels à des ressources extérieures à ce circuit.

En effet, un procédé conforme au paragraphe introductif est remarquable selon l'invention en ce que l'étape de calcul de la matrice transformée inverse de la multiplication est calculée par séquences qui résultent chacune en l'obtention de I colonnes de la matrice transformée inverse de la multiplication, M étant multiple de I et différent de I, lesdites I colonnes étant stockées dans une mémoire dite interne et en ce que l'étape de détection du marquage est réalisée, à chaque séquence, par détection de pics sur chaque ensemble des I colonnes pendant que lesdites I colonnes sont présentes dans la mémoire interne.

Le calcul de la matrice transformée inverse par séquences de I colonnes, I étant inférieur à M, permet de n'utiliser qu'une mémoire de taille inférieure à M*M mais au minimum de taille I*M. L'utilisation d'une telle mémoire de taille réduite permet de l'insérer aisément dans la portion de circuit matériel qui réalise les opérations utilisant les coefficients du marquage.

Dans un mode de réalisation préféré, l'étape de configuration destinée à configurer ledit marquage sous la forme d'une matrice de dimension M*M, l'étape de calcul des coefficients de la matrice transformée de Fourier de la matrice de marquage, l'étape de calcul de la transformée inverse de la multiplication et l'étape de détection du marquage sont réalisées à l'intérieur d'une même portion de circuit dite portion interne incluant la mémoire interne et des moyens de stockage pour stocker les coefficients du marquage ainsi que les matrices résultant des étapes de configuration et de calcul des coefficients de la matrice transformée de Fourier de la matrice de marquage.

On comprend qu'un tel calcul par séquence requiert de rappeler à chaque séquence les coefficients de la matrice transformée de Fourier du signal et de la matrice transformée de Fourier du marquage. Les coefficients de la matrice transformée de Fourier du marquage sont stockés en général dans la portion interne de circuit matériel et sont aisément accessibles. En revanche, encore pour éviter la présence de grandes quantités de mémoire dans la portion interne, les coefficients de la matrice transformée de Fourier du signal sont stockés à l'extérieur de la portion interne, par exemple dans une mémoire SDRAM, de laquelle ils sont rappelés au besoin. Ainsi, il apparaît un problème secondaire qui est la limitation de la bande passante d'accès à la mémoire externe pour la portion interne du circuit.

Dans un mode de réalisation avantageux, le nombre de colonnes I est calculé pour réaliser un compromis entre bande passante d'accès à une mémoire dite externe dans laquelle sont stockés les coefficients de la matrice transformée de Fourier de la matrice du signal et la capacité de la mémoire interne.

En effet, dans ce cas un compromis est en effet réalisé entre la taille de la mémoire interne qui peut être au minimum de I*M et la bande passante d'accès à la mémoire externe.

L'invention concerne encore une mise en oeuvre particulière du principe selon l'invention détaillant le calcul conjoint de la multiplication et de la transformée de Fourier inverse. L'invention peut être en particulier mise en oeuvre dans un circuit intégré destiné à la détection de marquage au sein d'un signal d'information.

Plus généralement, la présente invention peut être avantageusement mise en oeuvre dans tout appareil de traitement de signaux d'information qui peut être par exemple un décodeur de signaux vidéo numériques.

L'invention sera mieux comprise à la lumière de la description suivante de quelques modes de réalisation, faite à titre d'exemple et en regard des dessins annexés, dans lesquels :
la figure 1 est un diagramme schématique d'un procédé de détection de marquage selon l'invention,
la figure 2 illustre le fonctionnement de l'invention selon une mise en oeuvre particulière de l'invention,
la figure 3 est un diagramme schématique d'un circuit intégré selon l'invention,
la figure 4 illustre une recherche de pics réalisée en utilisant un procédé selon l'invention,
La figure 5 illustre un appareil de traitement de signaux d'information selon l'invention.

La description qui va suivre est présentée pour permettre à un homme du métier de réaliser et de faire usage de l'invention. Cette description est fournie dans le contexte de la demande de brevet et de ses exigences. Des alternatives diverses au mode de réalisation préféré seront évidentes à l'homme du métier et les principes génériques de l'invention exposés ici peuvent être appliqués à d'autres mises en oeuvre.

Ainsi, la présente invention n'est pas censée être limitée au mode de réalisation décrit mais plutôt avoir la portée la plus large en accord avec les principes et les caractéristiques décrites ci-après.

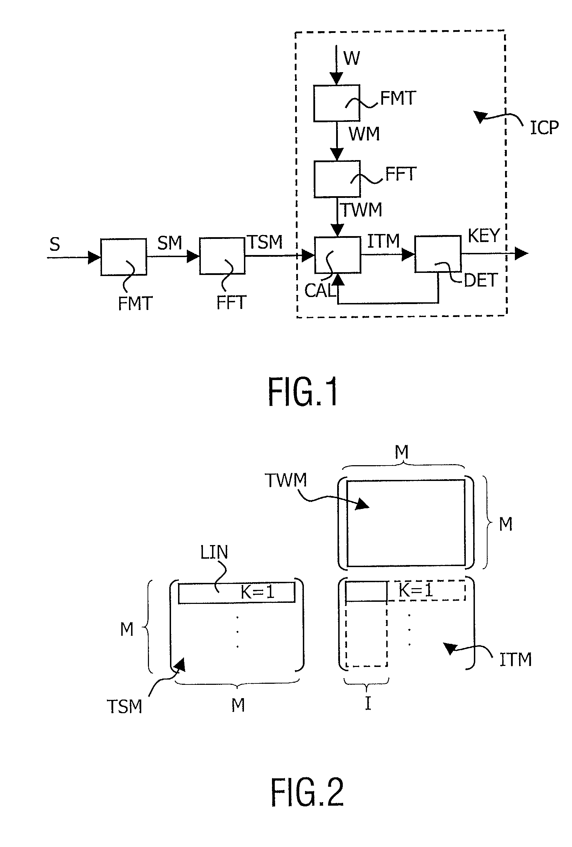

La figure 1 est un diagramme schématique d'un procédé selon l'invention. De multiples procédés de détection de marquage au sein, par exemple, de données vidéo numériques, sont connus. Ces procédés mettent en oeuvre divers perfectionnements basés sur un même principe : le calcul d'une corrélation entre un marquage incluant un ensemble de coefficients et le signal d'information. Par exemple, dans le cas d'une image vidéo, le marquage pourra être représenté dans les calculs par une matrice à deux dimensions représentant un bruit. L'invention concerne de tels marquages qui sont exprimables sous la forme d'une matrice de dimension M*M avec M entier supérieur ou égal à 1. De plus, il est aussi nécessaire pour plusieurs raisons allant de la qualité du signal à la sécurité, que le marquage ne soit pas visible sur le signal. Le marquage sera donc similaire à un bruit imperceptible ajouté au signal d'information. Le marquage selon l'invention peut consister en des labels invisibles attachés à un contenu qui peut être un contenu audio, vidéo, multimédia ou tout autre contenu sur lequel il est possible d'ajouter un bruit.

Le marquage de signaux d'information est destiné en particulier à éviter des copies de ces signaux d'information, à authentifier ces signaux... Ces fonctions nécessitent que le marquage apposé généralement sous la forme d'un filigrane, par exemple, constitué de points pseudo-aléatoires, reste secret et ne puisse être isolé. En effet, si tel était le cas, le marquage isolé pourrait être enlevé ou encore apposé sur de faux signaux... On comprend ici, la nécessité de sécuriser l'accès aux caractéristiques du marquage. Cela revient à ne pas laisser des données desquelles les caractéristiques du marquage puissent se déduire, circuler dans des portions de circuit où elles pourraient être lues. Il est remarquable de noter par ailleurs que d'autres fonctions de protection des données présentes dans un signal d'information peuvent être réalisées par l'intermédiaire d'un tel marquage. Par exemple, il est possible de permettre une première copie du signal, ladite copie déclenchant l'apposition d'un second marquage différent ou du même marquage décalé dans une direction d'une distance donnée. Ce dernier usage de plusieurs marquages éventuellement décalés sur le signal est particulièrement intéressant car très difficile à enlever. De plus, le choix de la distance entre deux marquages permet de donner au marquage final de l'image des sens et des fonctions variés vis-à-vis, par exemple de la sécurité, comme exposé auparavant.

Le procédé de détection d'un marquage W composé d'un ensemble de coefficients, dans un signal d'information S inclut, conformément à la figure 1, une étape de configuration FMT destinée à configurer ledit marquage W sous la forme d'une matrice WM de dimension M*M, et ledit signal d'information S sous la forme d'au moins une matrice SM de dimension M*M, une étape de calcul FFT des coefficients de la matrice transformée de Fourier TSM de la matrice du signal SM, une étape de calcul FFT des coefficients de la matrice transformée de Fourier TWM de la matrice de marquage WM, une étape de calcul CAL de la matrice transformée inverse ITM de la multiplication de la matrice transformée du signal TSM et de la transposée de la matrice transformée conjuguée du marquage TWM, une étape de détection DET du marquage par détection de pics dans les coefficients de la matrice transformée inverse ITM de la multiplication. Il est important de noter ici que les étapes de configuration et de calcul de transformée de Fourier pour finalement utiliser le marquage dans son expression fréquentielle peuvent être réalisées précédemment à la mise en oeuvre du procédé, le résultat de ces étapes étant alors directement stocké sous la forme d'une matrice dans le domaine de fréquence. Cela ne modifie pas la portée de l'invention dans le sens où, de toutes façons, la présence d'un marquage sous sa forme fréquentielle a nécessité son calcul et sa configuration sous forme de matrice. Le résultat KEY informe d'autres fonctions extérieures au procédé de détection du marquage de la présence ou de l'absence de marquage et de son sens et/ou de sa fonction. Le procédé de détection peut être mis en oeuvre avec différentes options ou perfectionnements connus de l'état de la technique. Par exemple, le signal d'information sur lequel est détecté le marquage peut être le résultat d'une accumulation d'une série de signaux d'information reçus durant une période donnée. Une moyenne sur un certain temps du signal est alors obtenue. Cela est possible lorsque le signal d'information est par exemple une séquence d'images vidéo. L'étape de transformée de Fourier peut aussi être simplifiée par exemple par un calcul par technique dite en papillons ("butterfly', en anglais). Comme le marquage est identique d'une image à l'autre, l'accumulation des images permet de faire ressortir le marquage au sein d'une image moyenne composée à partir de plusieurs images dont les différences sont moyennées et où, au contraire, le marquage est accumulé. Une étape de normalisation des amplitudes du signal d'information peut être réalisée sur le signal d'information préalablement à l'étape de multiplication, de manière à obtenir un signal épuré de sa valeur moyenne et à mieux faire ressortir les pics éventuels du marquage. Ces techniques sont connues du document de l'état de la technique et ne seront pas décrites plus en détail dans ce texte. Dans le cas où le signal d'information est normalisé, on parle de « SPOMF » dont le principe revient à considérer que les coefficients de phase portent l'information nécessaire et suffisante pour la détection de marquage, la norme moyenne du signal étant soustraite (SPOMF ; Symmetrical Phase only Matched Filtering en anglais).

L'invention se situe au niveau des étapes de calcul CAL et de détection DET. En effet, selon l'invention, en se référant à la figure 2, l'étape de calcul CAL de la matrice transformée inverse ITM de la multiplication de la matrice transformée du signal TSM et de la transposée de la matrice transformée conjuguée du marquage TWM est calculée par séquences qui résultent chacune en l'obtention de I colonnes de la matrice transformée inverse ITM de la multiplication, M étant multiple de I et différent de I, lesdites I colonnes étant stockées dans une mémoire dite interne et l'étape de détection DET du marquage est réalisée, à chaque séquence, par détection de pics sur chaque ensemble des I colonnes pendant que lesdites I colonnes sont présentes dans la mémoire interne.

Selon l'invention, les coefficients de toutes les lignes et de toutes les colonnes de la matrice résultant de la multiplication ne sont donc pas disponibles en même temps. Le calcul de la matrice transformée inverse par séquences de I colonnes, I étant inférieur à M, permet de n'utiliser qu'une mémoire (SRAM en général) de taille inférieure à M*M mais au minimum de taille I*M. L'utilisation d'une telle mémoire de taille réduite permet de l'insérer aisément dans la portion de circuit matériel qui comporte les ressources pour effectuer les autres opérations où les caractéristiques du marquage sont utilisées. Cela permet, à la fois de ne pas avoir à incorporer une mémoire de taille importante à l'intérieur de cette portion de circuit et, ledit circuit n'ayant pas de contact avec l'extérieur pour des appels mémoires lors des calculs relatifs à la détection du marquage, cela permet aussi d'obtenir un ensemble sécurisé.

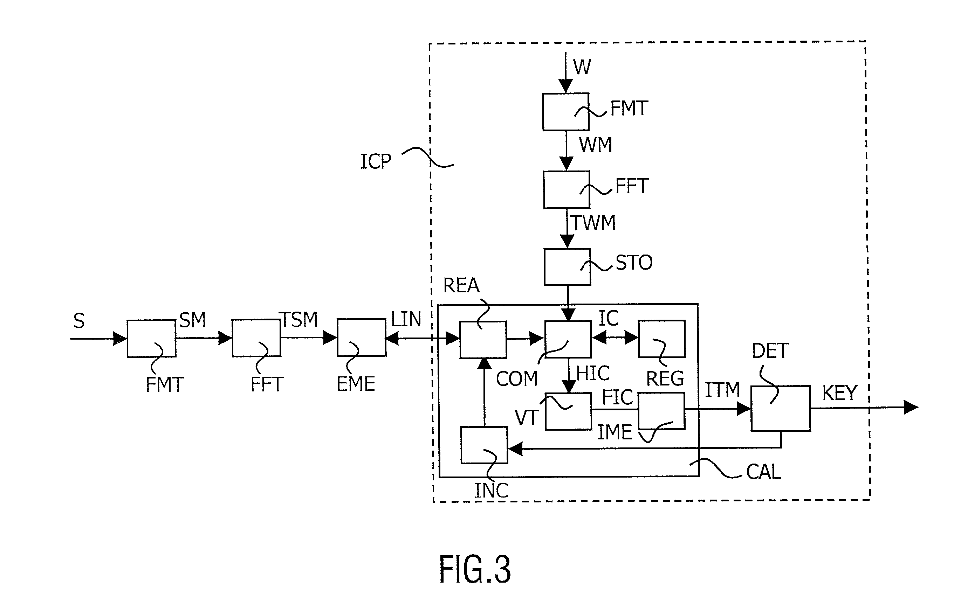

Ainsi, dans un mode de réalisation préféré illustré notamment dans le circuit intégré représenté schématiquement sur la figure 3, l'étape de configuration FMT destinée à configurer ledit marquage W sous la forme d'une matrice WM de dimension N*M, l'étape de calcul FFT des coefficients de la matrice transformée TWM de Fourier de la matrice de marquage WM, l'étape de calcul CAL de la transformée inverse de la multiplication et l'étape de détection DET du marquage sont réalisées à l'intérieur d'une même portion de circuit dite portion interne ICP incluant la mémoire interne IME, les moyens pour réaliser les étapes citées précédemment et des moyens de stockage STO pour stocker les coefficients du marquage W ainsi que les matrices WM résultant des étapes de configuration FMT et de calcul FFT des coefficients de la matrice transformée de Fourier TWM de la matrice de marquage. On remarque alors que la portion interne ICP du circuit est isolée des ressources extérieures. Mis en oeuvre en technologie semi-conducteur matériel, ce mode de réalisation permet de protéger tout accès aux caractéristiques du marquage, c'est-à-dire, notamment à ces coefficients.

En se référant par exemple à la figure 2, nous allons voir que le calcul par séquence selon l'invention requiert de rappeler à chaque séquence les coefficients de la matrice transformée de Fourier du signal TSM et de la matrice transformée de Fourier du marquage TWM. Les coefficients de la matrice transformée de Fourier du marquage TWM sont stockés en général dans la portion interne de circuit matériel ICP et sont aisément accessibles pour les fonctions de calcul propre à la détection du marquage. En revanche, encore pour éviter la présence de grandes quantités de mémoire dans la portion interne ICP, les coefficients de la matrice transformée de Fourier du signal sont stockés à l'extérieur de la portion interne dans une mémoire extérieure EME, par exemple une mémoire SRAM, de laquelle ils sont rappelés au besoin. Effectivement ces coefficients n'ont pas d'intérêt à rester secrets. Ainsi, il apparaît un problème secondaire qui est la limitation de la bande passante d'accès à la mémoire externe EME pour la portion interne ICP du circuit.

Dans un mode de réalisation avantageux, le nombre de colonnes I est calculé pour réaliser un compromis entre bande passante d'accès à une mémoire dite externe dans laquelle sont stockés les coefficients de la matrice transformée de Fourier de la matrice du signal et la capacité de la mémoire interne.

En effet, dans ce cas un compromis est en effet réalisé entre la taille de la mémoire interne qui peut être au minimum de I*M et la bande passante d'accès à la mémoire externe.

Par exemple dans une réalisation, les matrices sur lesquelles sont effectuées les diverses opérations sont de taille 128*128. Sans l'invention, la taille de la mémoire à incorporer à la portion interne du circuit est d'environ 2 mm² en technologie courante. Selon l'invention, si une seule colonne à la fois est calculée, il faudra faire 128 fois plus d'accès mémoire afin d'obtenir un résultat total sur la détection du marquage sur la matrice du signal que si la mémoire interne contenait la matrice résultat de la multiplication ITM en entier. Si quatre colonnes sont calculées à la fois, quatre fois moins d'accès sont requis qu'avec un calcul par séquence d'une colonne pour une mémoire de taille seize fois inférieure à celle nécessaire pour stocker la totalité de la matrice. On comprend ici l'intérêt net de l'invention même dans le cas où la bande passante vers la mémoire externe est assez faible.

Nous allons maintenant décrire plus précisément une mise en oeuvre particulière du principe selon l'invention en détaillant le calcul conjoint de la multiplication et de la transformée de Fourier inverse. La figure 2 est, à ce propos, indicative d'un mode spécial de réalisation. En effet, il est précisé que les calculs sont faits pour obtenir un ensemble de I colonnes pour des nécessités de clarté mais il est aussi possible que les calculs soient réalisés pour obtenir un ensemble de lignes sans pour autant s'exclure du principe de l'invention.

La figure 2 illustre schématiquement comment sont obtenus les coefficients de la matrice transformée inverse ITM. La figure 3 représentant un circuit intégré selon l'invention présente une portion de circuit interne ICP présentant des moyens pour effectuer les calculs relatifs à la détection du marquage selon la mise en oeuvre particulière évoquée sur la figure 2. La description qui va suivre fait donc appel à ces deux figures. La matrice transformée du signal TSM est stockée, par exemple, dans la mémoire externe EME. Cette matrice est lue par la portion interne ICP et plus particulièrement par les moyens de calcul CAL de la transformée inverse de la multiplication qui inclut des moyens de lecture REA ligne LIN par ligne LIN, lesdites lignes étant numérotées K avec K allant de 1 à M, des coefficients de la matrice transformée du signal TSM par accès à la mémoire externe EME où ils ont été stockés. Il faut noter que dans le cas où les coefficients présentent une symétrie sur la matrice, il peut être possible de ne lire que la moitié des coefficients et de changer, par exemple, le signe de l'argument pour faire les calculs pour l'autre moitié des coefficients. Cela permet de libérer de la bande passante. Des moyens de combinaison COM des calculs de la multiplication et de la transformée inverse de la multiplication reçoivent d'une part la ligne K de la matrice TSM et les coefficients de la matrice TWM stockés dans les moyens de stockage STO. Il est alors réalisé une combinaison de la multiplication de la ligne K lue dans la mémoire externe EME et de la matrice transformée de marquage TWM avec le calcul d'un nombre I, inclus entre un et M/2, des coefficients HIC de la transformée inverse horizontale de la ligne K, ladite combinaison étant réalisée séquentiellement sur la totalité des lignes LIN, pour obtenir, à chaque séquence pour lesquelles les lignes LIN sont toutes lues, un ensemble de I colonnes de coefficients HIC résultat de la transformée inverse horizontale de la multiplication des deux matrices. Le calcul se fait donc en deux temps. D'abord multiplication 'classiques' pour chacun des coefficients et transformée de Fourier horizontale immédiatement consécutive à partir d'un calcul temporaire des coefficients de la ligne de la matrice ITM correspondant à la ligne extraite de la matrice TSM. Pour chaque ligne, le calcul des I coefficients de la transformée horizontale nécessite d'avoir calculé la totalité des coefficients de la première ligne de ITM. Au moins un nombre de registres REG égal au nombre de colonnes de chaque séquence est donc nécessaire à l'invention pour permettre de garder au moins une partie des coefficients intermédiaires IC de la ligne nécessaires, le temps du calcul des coefficients HIC de la transformée inverse horizontale. Ces registres sont en réalité des accumulateurs dans lesquels s'accumule la somme des coefficients résultats de la multiplication des deux matrices, situés sur la ligne K correspondant à la ligne K extraite de la matrice transformée du signal, lesdits coefficients étant multipliés chacun par un facteur complexe correspondant à l'expression de la transformée inverse avant d'être ajouté au registre. Ce facteur complexe est de la forme exp(-i2.pi.K.n/128) dans le cas de matrices 128*128, K étant le numéro de la ligne et n est le numéro de l'échantillon sur la ligne K. Ainsi, par exemple, pour la matrice entière 128*128 (i.e. pour la totalité des séquences), en utilisant des séquences pour lesquelles I=1, 128*128*128 opérations seront nécessaires pour réaliser le calcul de corrélation puis 128*128*128 opérations pour le calcul de la transformée inverse horizontale si ces deux opérations sont réalisées séparément ou 128*128*128 en tout si Le calcul de corrélation et celui de la transformée inverse sont faits l'un à la suite de l'autre. Concernant l'accès à la mémoire externe, il est nécessaire de lire 128 fois la matrice TSM, ce qui revient à faire 128*128*128 accès.

Une fois que les I colonnes de coefficients de la séquence, résultant de la transformée de Fourier inverse HIC sont obtenues, le calcul de la transformée verticale est réalisé à l'aide de la totalité des coefficients résultat de la transformée inverse horizontale de la colonne par des moyens de calcul de la transformée verticale VT. Il est utile de noter ici que seul le calcul de la transformée inverse verticale peut être optimisé par des méthodes usuelles de simplification du calcul employées en traitement du signal, technique par papillons par exemple ('butterfly', en anglais)... Dans ce cas avec des calculs dits papillons, 7*128*128 opérations seront réalisées pour calculer la transformée inverse verticale sur la totalité de la matrice, c'est-à-dire pour la totalité des séquences. Sinon, à nouveau 128*128*128 opérations seront nécessaires pour réaliser la transformée inverse verticale. En effet, le calcul de la transformée inverse verticale est réalisé alors que l'on dispose de la totalité des coefficients de la colonne alors que pour le calcul de la transformée horizontale, les coefficients ne sont pas disponibles tous ensemble et le calcul par technique en papillons n'est pas réalisable. Le calcul de la transformée verticale donne donc les coefficients finaux FIC de la matrice ITM qui sont stockés dans la mémoire interne IME. Ces coefficients finaux FIC sont utilisés au sein des moyens de détection DET où pour chaque séquence, les I colonnes sont analysées pour trouver le maximum et le garder, en général, dans un registre ou dans la mémoire interne si sa valeur est supérieure à la valeur présente dans le registre. Le contenu dudit registre est donc modifié le long des séquences afin d'y avoir toujours la valeur maximale sur la matrice. Ainsi le pic maximal P1 est détecté sur la matrice. Sa valeur est stockée aussi afin, notamment, de pouvoir corréler cette valeur avec celle de pics trouvés par la suite. Les techniques de détection de pics sont bien connues de l'état de la technique.

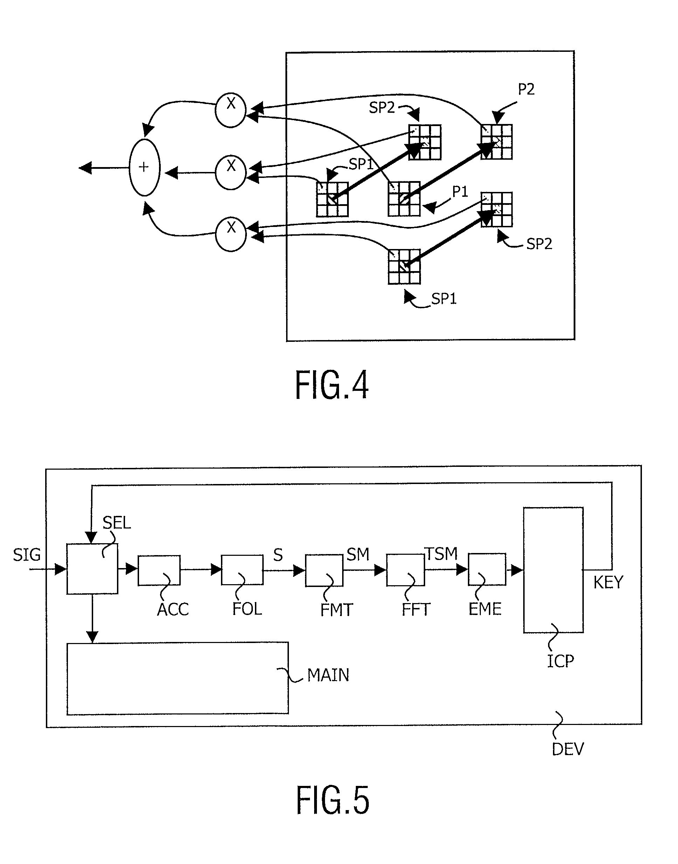

Concernant la détection de pics secondaires, et en se référant à la figure 4, la zone de 8 pixels entourant le premier pic n'est pas considérée pour la recherche du second pic. On définit aussi une zone d'exclusion autour du premier pic où le second pic ne sera pas recherché. Par exemple, sur la figure 4, cette zone est la croix définie par les projections horizontales et verticales de la zone de 8 pixels entourant le premier pic. Il est ensuite avantageux de grouper la détection du second pic et de plusieurs sous-pics, par exemple deux sur la figure mais avantageusement un plus grand nombre (seize par exemple), en utilisant autant de registres pour les conserver en mémoire. Il est aussi utile.de disposer des positions et valeurs de plusieurs sous-pics SP1 situés dans la zone d'exclusion pour réaliser des corrélations de ces sous-pics SP1 avec les sous-pics SP2 similaires du second pic P2. La recherche du pic P2 revient à corréler chacun des 16 sous-pics trouvés hors de la zone d'exclusion avec le premier pic, le second pic étant celui pour lequel la corrélation est maximale. Pour cette étape de recherche de second pic et de sous-pics, autant d'opérations et d'accès mémoire que précédemment seront nécessaires si aucune optimisation n'est faite car la matrice TSM doit encore être rappelée un nombre de fois important.

Sur la figure 4, pour rechercher le second pic et les sous-pics, les sous-pics sont cherchés hors de la zone autour du premier pic, ils remplissent ainsi 3 premiers espaces mémoire ou registres, puis la recherche est ensuite réalisée sur la zone d'exclusion et les sous-pics trouvés sont eux aussi mis en mémoire. Ensuite, le premier pic est corrélé avec chacun des sous-pics présents hors de la zone d'exclusion, le meilleur étant identifié comme le second pic. Puis, les sous-pics sont corrélés entre eux avec le pic leur correspondant, c'est-à-dire pour lequel un déplacement équivalent à celui trouvé entre le premier et le second pic a été appliqué, comme schématisé par les flèches en traits épais. Sur la figure 4, la corrélation est réalisée sur une zone 3*3 pour des raisons de simplicité d'illustration mais il est avantageux de faire la corrélation sur des zones 9*9. Pour la mise en oeuvre avec 16 sous-pics, la mémoire interne doit disposer de 2*16 places mémoires pour les corrélations accumulées et pour les résultats temporaires de la transformée inverse.

Plus généralement, la présente invention peut être avantageusement mise en oeuvre dans tout appareil de traitement de signaux d'information qui peut être par exemple un décodeur de signaux vidéo numériques.

L'invention concerne donc également un appareil DEV de traitement de signaux d'information qui peut être par exemple un décodeur de signaux vidéo numériques. Un tel appareil DEV est décrit sur la figure 5. Cet appareil reçoit des signaux d'information SIG, ces signaux sont destinés à être utilisés pour une fonction principale MAIN de l'appareil DEV. Cette fonction principale peut par exemple être l'affichage d'un contenu vidéo, le signal d'information provenant de ce contenu vidéo. L'appareil DEV inclut des moyens SEL pour agir sur la fourniture des signaux d'information à la fonction principale MAIN. Ces moyens sont guidés par le résultat KEY d'une détection de marquage selon l'invention. Ce résultat Key est nommé clef et elle donne un sens à la position du premier et du second ainsi qu'à la distance entre eux. Cette détection est réalisée à l'intérieur d'une portion interne de circuit ICP telle que décrite auparavant. L'appareil peut avantageusement inclure en outre des moyens d'accumulation ACC pour faire une moyenne sur plusieurs signaux d'information de manière à mieux faire ressortir le marquage qui est identique sur chacun des signaux qui, eux, sont différents l'un de l'autre. Des moyens de préparation des données FOL transforment le signal brut en données exploitables dans notre procédé. Par exemple, par technique de pliage ('folding', en anglais) : les signaux bruts sont découpés en matrices M*M, les matrices étant sommées pendant un temps donné, chaque pixel d'une première matrice étant sommé avec son correspondant dans une seconde matrice. Plusieurs matrices M*M sont alors traitées dans le procédé selon l'invention pour détecter le marquage. Ensuite, le signal est configuré par des moyens FMT puis une transformée de Fourier y est appliquée, le résultat étant stocké dans une mémoire dite externe EME avant d'être exploité au sein de la portion interne ICP.

Bien que cette invention ait été décrite en accord avec les modes de réalisation présentés, un homme du métier reconnaîtra immédiatement qu'il existe des variantes aux modes de réalisation présentés et que ces variantes restent dans l'esprit et sous la portée de la présente invention. Ainsi, de nombreuses modifications peuvent être réalisées par un homme du métier sans pour autant s'exclure de l'esprit et de la portée définis par les revendications suivantes.

## Revendications

1. Procédé de détection d'un marquage composé d'un ensemble de coefficients, dans un signal d'information, incluant les étapes de :
- configuration destinée à configurer ledit marquage sous la forme d'une matrice de dimension M*M, et ledit signal d'information sous la forme d'au moins une matrice de dimension M*M,
- calcul des coefficients de la matrice transformée de Fourier de la matrice du signal,
- calcul des coefficients de la matrice transformée de Fourier de la matrice de marquage,
- calcul de la matrice transformée inverse de la multiplication de la matrice transformée du signal et de la matrice transformée du marquage,
- détection du marquage par détection de pics dans les coefficients de la matrice transformée inverse de la multiplication,
**caractérisé en ce que** l'étape de calcul de la matrice transformée inverse de la multiplication est calculée par séquences qui résultent chacune en l'obtention de I colonnes de la matrice transformée inverse de la multiplication, M étant multiple de I et différent de I, lesdites I colonnes étant stockées dans une mémoire dite interne et **en ce que** l'étape de détection du marquage est réalisée, à chaque séquence, par détection de pics sur chaque ensemble des I colonnes pendant que lesdites I colonnes sont présentes dans la mémoire interne.

2. Procédé selon la revendication 1, **caractérisé en ce que** l'étape de configuration destinée à configurer ledit marquage sous la forme d'une matrice de dimension M*M, l'étape de calcul des coefficients de la matrice transformée de Fourier de la matrice de marquage, l'étape de calcul de la transformée inverse de la multiplication et l'étape de détection du marquage sont réalisées à l'intérieur d'une même portion de circuit incluant la mémoire interne et des moyens de stockage pour stocker les coefficients du marquage ainsi que les matrices résultant des étapes de configuration et de calcul des coefficients de la matrice transformée de Fourier de la matrice de marquage.

3. Procédé selon l'une des revendications 1 et 2, **caractérisé en ce que** le nombre de colonnes I est calculé pour réaliser un compromis entre bande passante d'accès à une mémoire dite externe dans laquelle sont stockés les coefficients de la matrice transformée de Fourier de la matrice du signal et la capacité de la mémoire interne.

4. Procédé selon l'une des revendications 1 à 3, **caractérisé en ce que** chaque séquence de l'étape de calcul de la transformée inverse de la multiplication inclut les sous-étapes suivantes :
- lecture ligne par ligne des coefficients de la matrice transformée du signal par accès à une mémoire dite externe où ils ont été stockés,
- combinaison de la multiplication de la ligne lue dans la mémoire externe et de la matrice transformée de marquage avec le calcul d'un nombre I, inclus entre un et M/2, des coefficients de la transformée inverse horizontale de la ligne, ladite combinaison étant réalisée séquentiellement sur la totalité des lignes, pour obtenir, à chaque séquence, un ensemble de I colonnes de coefficients résultat de la transformée inverse horizontale de la multiplication des deux matrices,
- calcul, à chaque séquence, de la transformée inverse verticale de Fourier sur les M coefficients présents dans les I colonnes de coefficients résultat de la transformée inverse horizontale.

5. Circuit intégré destiné à la détection d'un marquage composé d'un ensemble de coefficients, dans un signal d'information, incluant des moyens pour :
- configurer ledit marquage sous la forme d'une matrice de dimension M*M, et ledit signal d'information sous la forme d'au moins une matrice de dimension M*M,
- calculer les coefficients de la matrice transformée de Fourier de la matrice du signal,
- calculer les coefficients de la matrice transformée de Fourier de la matrice de marquage,
- calculer la matrice transformée inverse de la multiplication de la matrice transformée du signal et de la matrice transformée du marquage,
- détecter le marquage par détection de pics dans les coefficients de la matrice transformée inverse de la multiplication,
**caractérisé en ce que** les moyens de calcul de la matrice transformée inverse de la multiplication fonctionnent par séquences qui résultent chacune en l'obtention de I colonnes de la matrice transformée inverse de la multiplication, M étant multiple de I et différent de I, lesdites I colonnes étant stockées dans une mémoire dite interne et **en ce que** les moyens de détection du marquage utilisent, à chaque séquence, une détection de pics sur chaque ensemble des I colonnes pendant que lesdites I colonnes sont présentes dans la mémoire interne.

6. Circuit selon la revendication 5, **caractérisé en ce que** le nombre de colonnes I est calculé pour réaliser un compromis entre bande passante d'accès à une mémoire dite externe dans laquelle sont stockés les coefficients de la matrice transformée de Fourier de la matrice du signal et la capacité de la mémoire interne.

7. Circuit selon l'une des revendications 5 et 6, **caractérisé en ce que** les moyens pour configurer ledit marquage sous la forme d'une matrice de dimension M*M, les moyens de calcul des coefficients de la matrice transformée de Fourier de la matrice de marquage, les moyens de calcul de la transformée inverse de la multiplication et les moyens de détection du marquage sont réalisés à l'intérieur d'une même portion dudit circuit incluant en outre la mémoire interne et des moyens de stockage pour stocker les coefficients du marquage ainsi que les matrices résultant des étapes de configuration et de calcul des coefficients de la matrice transformée de Fourier de la matrice de marquage.

8. Circuit selon l'une des revendications 5 à 7, **caractérisé en ce que** les moyens de calcul de la transformée inverse de la multiplication incluent des sous-moyens activés dans chaque séquence pour :
- lire ligne par ligne des coefficients de la matrice transformée du signal par accès à une mémoire dite externe où ils ont été stockés,
- combiner de la multiplication de la ligne lue dans la mémoire externe et de la matrice transformée de marquage avec le calcul d'un nombre I, inclus entre un et M/2, des coefficients de la transformée inverse horizontale de la ligne, ladite combinaison étant réalisée séquentiellement sur la totalité des lignes, pour obtenir, à chaque séquence, un ensemble de I colonnes de coefficients résultat de la transformée inverse horizontale de la multiplication des deux matrices,
- calculer, à chaque séquence, de la transformée inverse verticale de Fourier sur les M coefficients présents dans les I colonnes de coefficients résultat de la transformée inverse horizontale.

9. Circuit selon l'une des revendications 5 à 8, **caractérisé en ce que** la mémoire interne est de taille strictement inférieure à M*M.

10. Appareil de traitement de signal d'information **caractérisé en ce qu'**il inclut un circuit intégré selon l'une des revendications 5 à 9.
